Europäisches Patentamt

(19) European Patent Office

Office européen des brevets

(11) Publication number : **0 197 675**
**B1**

(12) **EUROPEAN PATENT SPECIFICATION**

(45) Date of publication of patent specification :
30.11.88

(21) Application number : 86301872.7

(22) Date of filing : 14.03.86

(51) Int. Cl.⁴ : **C 01 B 3/00**, C 22 C 1/00

(54) Amorphous metal alloy compositions for reversible hydrogen storage.

(30) Priority : 29.03.85 US 717429

(43) Date of publication of application :
15.10.86 Bulletin 86/42

(45) Publication of the grant of the patent :
30.11.88 Bulletin 88/48

(84) Designated contracting states :
BE DE FR GB IT NL SE

(56) References cited :
GB-A- 2 051 128
CHEMICAL ABSTRACTS, vol. 92, no. 26, 30th June 1980, page 150, abstract no. 217951v, Columbus, Ohio, US; F.H. SPIT et al.: "Hydrogen sorption in amorphous nickel-zirconium and nickel-zirconium-titanium alloys", & Z. PHYS. CHEM. (WIESBADEN) 1979, 116, 225-32
METALS ABSTRACTS, vol. 34, December 1984, page 77, reference no. 34-0969; G.G. LIBOWITZ et al.: "Interactions of hydrogen with metallic glass alloys", MATERIALS ENGINEERING CONFERENCE, 1981 [PROC. CONF.], Haifa, Israel, 20-22 December 1981

(73) Proprietor : THE STANDARD OIL COMPANY
200 Public Square, 36-F-3454
Cleveland Ohio 44114-2375 (US)

(72) Inventor : Henderson, Richard S.
6280 Sunnywood Dr.
Solon Ohio 44139 (US)
Inventor : Tenhover, Michael A.
31700 Cheswick Place
Solon Ohio 44139 (US)
Inventor : Grasselli, Robert K.
462-2 Overlook Dr.
Aurora Ohio 44202 (US)
Inventor : Harris, Jonathan H.
3705 Strandhill Rd.
Shaker Hts Ohio 44122 (US)

(74) Representative : Smith, Sydney et al
Elkington and Fife High Holborn House 52/54 High Holborn
London WC1V 6SH (GB)

**0 197 675**

**Description**

Field of the Invention

The present invention relates to novel amorphous metal alloy compositions capable of reversible hydrogen storage. These compositions are capable of cyclically storing and releasing relatively large quantities of hydrogen without becoming corroded or inactivated by oxidation.

Background of the Invention

Shortages of fossil fuel materials in the recent past has spurred much speculation regarding the feasibility of economies based on other energy sources. One such scenario is a hydrogen-fueled economy. Hydrogen has the highest energy density per unit weight of any chemical. Many projections have been made for an economy based on this element, but the technology is not yet in place to effect such a dramatic change in the world economy. Hydrogen is, however, a technically attractive source of fuel and energy storage. It is essentially non-polluting, the major by-product of combustion being $H_2O$, and can be made from readily available and abundant raw materials.

While it is well known that hydrogen can be stored as a compressed gas or cryogenically as a liquid, other less energy-intensive and more convenient means are required for widespread utilization of hydrogen as a source of stored energy.

It is known that some metals and metal alloys are capable of storing hydrogen reversibly within their lattice. This characteristic may be exploited by exposing the metal or metal alloy to a large pressure of hydrogen, impregnating the metal or metal alloy with hydrogen and later recovering the stored hydrogen by subjecting the impregnated metal or alloy to a change in temperature or pressure. One example of a metal that is capable of reversible hydrogen storage is palladium which can absorb up to 0.6 hydrogen atoms for every palladium atom. For an example of reversible hydrogen storage alloys, see, R.L. Cohen and J.H. Wernick, « Hydrogen Storage Materials : Properties and Possibilities », Science, December 4, 1981, Vol. 214, No. 4526, pg. 1081, which reported on the ability of alloys such as $LaNi_5$ to absorb hydrogen in the gas phase.

This characteristic of reversible hydrogen storage for $LaNi_5$-type alloys was reported as also being applicable in an electrochemical environment by Bronoel et al, « A New Hydrogen Storage Electrode », International Journal of Hydrogen Energy, Vol. 1, pp. 251-254, 1976. A metal or metal alloy suitable as a hydrogen storage material may be cathodically biased relative to a suitable counter electrode and charged with hydrogen by the reduction of a proton from solution. Other metal alloy systems that have been studied include TiMn-based, FeTi-based and Mg-based alloys. Although some of these crystalline materials store appreciable quantities of hydrogen, these same crystalline materials are susceptible to phase separation, hydrogen embrittlement and surface oxidation when subjected to repeated charge/discharge cycles for hydrogen storage. Phase separation occurs in crystalline alloys that are subjected to hydrogen cycling, wherein the alloy components separate and migrate throughout the alloy. In $LaNi_5$-type alloys, La migrates to the surface of the alloy, where it may rapidly become oxidized.

This problem was recently addressed in Japanese Publication 58, 163, 157 entitled « Metal Oxide-Hydrogen Battery ». This publication describes a hydrogen storage battery having an improved $LaNi_5$ anode that is less susceptible to oxidation. This improvement comes from the use of a porous nickel layer disposed around the $LaNi_5$ anode to reduce oxidation.

Hydrogen embrittlement occurs in crystalline alloys as hydrogen is absorbed and desorbed. Hydrogen storage proceeds from the surface of the alloy to its interior, with hydrogen atoms breaking into the interstitial site of metal matrix atoms and then expanding the lattice. As a result internal stresses may produce flaws and cracks, seriously weakening and embrittling the metal or metal alloy. Surface oxidation may occur if the hydrogen storage material is exposed to oxidative conditions in the presence of an oxidant such as $CO_2$, $H_2O$, KOH, air or oxygen. Surface oxidation interferes with the penetration of hydrogen, reducing the amount of hydrogen absorbed and the rate of absorption. Additionally, these crystalline materials generally cannot withstand corrosive environments, which environments may exist when the materials are utilized in an electrochemical reaction. An analysis of the Ti-Mn alloy system, and it attendant drawbacks, is provided in Yayama, et al., « Electrochemical Hydrogen-Storage in Ti-Mn Alloy Electrodes », Japanese Journal of Applied Physics, Vol. 22, No. 10, pp. 621-623, October, 1983.

Recently, amorphous metal alloy materials have been reported as having the ability to store hydrogen reversibly. Amorphous metal alloy materials have become of interest due to their unique combinations of mechanical, chemical and electrical properties. Amorphous metal materials have compositionally variable properties including high hardness and strength, flexibility, soft magnetic and ferroelectric properties, very high resistance to corrosion and wear, unusual alloy compositions, and high resistance to radiation damage. The unique combinations of properties possessed by amorphous metal alloy materials may be attributed to the disordered atomic structure of amorphous materials that insures that the material is chemically homogeneous and free from the extended defects that are known to limit the performance of crystalline materials.

2

**0 197 675**

A general discussion of hydrogen absorption by amorphous or glassy metal alloys was provided by G.G. Libowitz and A.J. Maeland, « Interactions of Hydrogen with Metallic Glass Alloys » Journal of the Less-Common Metals, 101, pp. 131-143, 1984.

Schroeder and Koster studied hydrogen embrittlement in Fe-Ni-B, Pd-Zr and Ni-Zr amorphous alloys ribbons, « Hydrogen Embrittlement of Metallic Glasses », Journal of Non-Crystalline Solids, 56, pp. 213-218, 1983. Whereas Fe-Ni-B alloys exhibited low hydrogen absorption and severe embrittlement, Pd-Zr and Ni-Zr alloys could absorb up to one atom of hydrogen per metal atom and still retain some ductility.

Amorphous metal alloy systems of TiCu and ZrCu were investigated and contrasted with the absorption properties of the corresponding crystalline intermetallic compounds by Maeland, et al., « Hydrides of Metallic Glass Alloys », Journal of the Less-Common Metals, 74, pp. 279-285, 1980. Amorphous metal alloy compositions, under similar conditions of temperature and pressure were capable of absorbing larger amounts of hydrogen than their crystalline counterparts. Maeland, et al. restricted their studies to the gaseous absorption of hydrogen in a hydrogen atmosphere. The amorphous compositions are not expected to suffer from phase separation or to become embrittled, due to their unique structure. However, these materials may not show substantial resistance to surface passivation by oxidation or to corrosion. Maeland, et al., by excluding oxygen in their system, and by working in a gaseous environment, have avoided addressing the effects of oxidation and harsh environments on the hydrogen storage amorphous metal alloys that were investigated.

Thus it is seen that the potential exists for significant new technological advances in the application of amorphous metal alloys to the development of hydrogen as a fuel and a source of stored energy, especially in the area of electrochemical reversible hydrogen storage. What is needed in this area are amorphous metal alloy compositions having the ability to reversibly store hydrogen in significant quantities. Such amorphous metal alloys should not suffer from phase separation or hydrogen-caused embrittlement, nor be susceptible to surface oxidation or corrosion.

It is therefore one object of the present invention to provide amorphous metal alloy compositions capable of reversibly storing hydrogen.

It is an additional object of the present invention to provide amorphous metal alloy compositions capable of reversibly storing hydrogen in a cyclical fashion without becoming embrittled or suffering from a phase separation.

It is yet another object of the present invention to provide amorphous metal alloy compositions capable of reversibly storing hydrogen in a cyclical manner that are not impaired by surface oxidation or corrosion.

These and other objects of the present invention will become apparent to those skilled in the art from the description that follows and the appended claims.

### Summary of the Invention

The present invention is directed toward a reversible hydrogen storage material comprising an amorphous metal alloy of the formula :

$$A_a M_b M'_c.$$

wherein

A is at least one metal selected from the group consisting of Ag, Au, Hg, Pd and Pt ;

M is at least one metal selected from the group consisting of Pb, Ru, Cu, Cr, Mo, Si, W, Ni, Al, Sn, Co, Fe, Zn, Cd, Ga and Mn ; and

M' is at least one metal selected from the group consisting of Ca, Mg, Ti, Y, Zr, Hf, Nb, V, Ta and the rare earth metals ;

and wherein

a ranges from about 0.005 to about 0.80 ;

b ranges from about 0.05 to about 0.70 ; and

c ranges from about 0.08 to about 0.95.

### Detailed Description of the Invention

The compositions described herein are substantially amorphous metal alloys. The term « substantially » as used herein in reference to the amorphous metal alloys indicates that the metal alloys are at least fifty percent amorphous, as indicated by X-ray diffraction analysis. Preferably, the metal alloy is at least eighty percent amorphous, and most preferably about one hundred percent amorphous, as indicated by X-ray diffraction analysis. The use of the phrase « amorphous metal alloy » herein refers to amorphous metal-containing alloys that may also comprise non-metallic elements.

In accordance with the present invention there are provided amorphous metal alloy compositions having the ability to reversibly store hydrogen. These amorphous metal alloys are represented by the empirical formula :

3

0 197 675

$$A_aM_bM'_c$$

wherein

A is at least one element selected from the group consisting of Ag, Au, Hg, Pd and Pt ;

M is at least one metal selected from the group consisting of Pb, Ru, Cu, Cr, Mo, Si, W, Ni, Al, Sn, Co, Fe, Zn, Cd, Ga and Mn ;

M' is at least one element selected from the group consisting of Ca, Mg, Ti, Y, Zr, Hf, Nb, V, Ta and the rare earths ;

and wherein

a ranges from about 0.005 to about 0.80 ;

b ranges from about 0.05 to about 0.70 ; and

c ranges from about 0.08 to about 0.95.

If only hydrogen storage ability is considered, then preferably, A is Ag, Pd or combinations thereof, and M is an element selected from the group consisting of Mn, Ru, Fe, Cu, Ni, Cr, Mo, Al, W and combinations thereof. Most preferably, M is an element selected from the group consisting of Mn, Ru, Cu, Ni, Fe, Mo, Cr, W and combinations thereof, and M' is titanium, magnesium, tantalum or a combination thereof. By combinations is meant mixtures and/or alloys of the above-listed elements.

Preferably, the ranges of a, b and c are from about 0.01 to about 0.75 ; about 0.1 to about 0.5 ; and from about 0.2 to about 0.85, respectively. Most preferably, the ranges of a, b and c are from about 0.02 to about 0.7 ; about 0.2 to about 0.4 ; and from about 0.3 to about 0.8, respectively.

When the hydrogen storage composition is to be employed in an alkaline condition, that is, in an environment wherein the pH is measured to be greater than seven, then it is preferred that the M component of the composition include at least one of the elements Mo, Ru, Ni and Mn. Similarly, when the hydrogen storage composition is to be utilized in neutral or acid conditions, that is, in an environment wherein the pH is measured to be seven or less, then it is preferred that the M component of the composition include at least one of the elements Ru, Pb, Cu, Cr, W and Mo. It has been found that the compositions of this invention having the formula $A_aM_bM'_c$ and wherein M includes at least one of Mo, Ru, Ni and Mn, are extremely stable in alkaline environments, and compositions wherein M includes at least one of Ru, Pb, Cu, Cr, W and Mo are extremely stable in neutral and acid environments. Compositions of this invention having the formula $A_aM_bM'_c$ and wherein M includes at least one of the elements Mo, Ru, W, Cr and Ni are expected to be extremely stable in non-aqueous electrolytes and in contact with solid state proton conductors.

Amorphous hydrogen storage compositions of the present invention include Pd-Mo-Ti, Ag-(CuNi)-Ti, Ag-Si-Ti, Ag-W-Ti and Pd-(AlNi)-Ti. The foregoing list is not to be construed as limiting but merely exemplary. These compositions have been found to have the desirable properties of reversible hydrogen storage in combination with corrosion and oxidation resistance and stable mechanical properties.

The amorphous metal alloy compositions taught herein have the ability to reversibly store from about 0.35 to more than about 1.1 hydrogen atoms per molecule of alloy. This compares favorably to known hydrogen storage materials such as crystalline palladium capable of reversibly storing about 0.55 hydrogen atoms per atom of palladium.

Since the compositions in accordance with this invention are substantially amorphous, these compositions do not exhibit phase separations and are less susceptible to hydrogen embrittlement even after continuous hydrogen cycling of the compositions. Compositions having the formula $A_aM_bM'_c$ have been cycled up to 500 times with no apparent degradation from phase separation.

Additionally, these compositions have been cycled in oxidative atmospheres with no appreciable surface passivation. Thus, these compositions will continue to reversibly store hydrogen through many cycles without any decrease in efficiency due to surface oxidation. Surface passivation is a major cause of failure of known hydrogen storage materials. Crystalline hydrogen storage materials do not exhibit the ability to resist surface oxidation. The general class of amorphous hydrogen storage materials are also not excluded from surface passivation. The compositions taught herein, however, show no significant passivation when used to continuously store and release hydrogen in the presence of oxygen, hydroxide ion and/or water. The incorporation of an A component in the compositions herein disclosed protect these compositions from surface passivation and retain the compositions' ability to actively absorb and desorb hydrogen.

The amorphous metal alloy compositions of the present invention also demonstrate resistance to corrosion. Utilization of hydrogen storage materials in electrochemical systems may subject the material to a corrosive environment that is capable of degrading the hydrogen storage material. Examples of corrosive environments include KOH solutions as well as such acid solutions as $H_2SO_4$, $H_3PO_4$, HCl, $Na_2SO_4$, NaCl and/or acetic acid. Hence, the stability of the hydrogen storage material in an electrolyte solution may determine its potential for use in that system. The amorphous alloy compositions taught herein have been subjected to a variety of corrosive environments with no decrease in stability detected. An electrolyte solution of 2N KOH was seen to oxidize and passivate amorphous metal alloys comprising NiTi, but not to affect compositions in accordance with this invention such as Pd-Ni-Ti. Likewise, electrolyte solutions of $H_2SO_4$ and $H_3PO_4$ were seen to corrode crystalline Pd but not to affect compositions taught herein such as Pd-Mo-Ti.

4

The presence of other elements as impurities in the amorphous metal alloy composition is not expected to seriously impare the ability of the alloy to reversibly store hydrogen. Thus, trace impurities such as O, N, C, S, Se, Te, B, P, Ge, Sb, As and Ar are not expected to be seriously detrimental to the preparation and performance of these materials.

To insure the desired hydrogen storage properties of these amorphous metal alloy materials, it is not intended that these materials be exposed to an environment wherein the temperature of the alloy may reach or exceed its crystallization temperature.

The substantially amorphous metal alloys taught herein may exist separately or may be used in conjunction with a substrate. A ribbon of the amorphous metal alloy may provide a freestanding hydrogen storage plate ; packed powder of the compositions herein disclosed may provide bulk hydrogen storage means ; and these compositions deposited on substrates of any configuration may provide a possible hydrogen storage film of any desired shape.

These compositions may be synthesized by any of the known techniques for forming amorphous metal alloys. Thus, physical and chemical methods such as electron beam deposition, ion implantation, chemical reduction, thermal decomposition, ion cluster deposition, ion plating, liquid quenching, solid state diffusion and RF and DC sputtering may be utilized to form the compositions herein.

The following examples demonstrate the hydrogen storage ability of the compositions described in the present invention along with other desirable properties such as resistance to surface passivation and corrosion. It is to be understood that these examples are utilized for illustrative purposes only, and are not intended, in any way, to be limitative of the present invention.

Examples

The following examples demonstrate the hydrogen storage ability of materials in an electrochemical environment. The composition to be tested was disposed in an electrolytic cell as a hydrogen storage electrode. The electrolytic cell also utilized a counter electrode of either NiOH or graphite and an electrolyte of KOH, $H_2SO_4$ or $H_3PO_4$.

Examples 1-5 are controls, utilizing a crystalline palladium electrode in Example 1 and amorphous metal alloy electrode materials not in conformance with the teaching of this invention as the hydrogen storage electrodes in Example 2-5. Examples 6-21 incorporated a substantially amorphous metal alloy hydrogen storage electrode materials as taught herein as the electrode material.

The amorphous metal alloys, both controls and those in accordance with the present invention, were prepared via RF sputtering in argon gas. A two-inch research S-gun, manufactured by Sputtered Films, Inc. was employed. As is known, DC sputtering can also be employed and achieve similar results. For each of the examples, a titanium substrate was positioned in receive the deposition of the sputtered amorphous alloy. The distance between the target and the substrate in each instance was approximately 10 centimeters. The amorphous alloy composition sputtered onto the titanium substrate ranged from about 0.4 micron to about 1 micron in thickness. The composition of each alloy was verified by X-ray analysis and was also determined to be amorphous by X-ray analysis.

The amorphous metal alloys were then employed as hydrogen storage electrodes in an electrolytic cell, the hydrogen storage electrode having an active surface area of about 1.5 cm². The hydrogen storage electrode material, counter electrode and electrolyte for each example are listed below in Table 1. The hydrogen electrode was cyclically charged at about 1 mA until the cell voltage stabilized, and then discharged at about 1 mA. The efficiency of the hydrogen electrode for each example was then calculated in terms of the hydrogen to metal ratio (H/M) and a charge density measured as a charge-per-weight (mA-hr/gm) and a charge-per-volume (mA-hr/cm³). The results of these calculations are also shown in Table 1 below. Unless otherwise noted in Table 1, each composition was cycled at least ten times before the calculations of the H/M ratio and charge density were made.

It is to be noted that the amorphous metal compositions shown in Examples 6-14 are utilized in an alkaline environment and the compositions shown in Examples 5-21 are operated under acid conditions.

(See Table 1 page 6)

Table 1

Hydrogen storage ability of various metal compositions

| Example | Composition | Counter Electrode | Electrolyte | Hydrogen-to Metal Ratio (H/M) | Charge Density | |
|---|---|---|---|---|---|---|
| | | | | | (mA-hr/gm) | (mA-hr/cm$_3$) |
| 1 | crystalline Pd | graphite | 2N H$_2$SO$_4$ | 0.55 | 139 | 1 668 |
| 2 | Ni$_{55}$Ti$_{45}$ | NiOH | 2N KOH | (a) | (a) | (a) |
| 3 | Ni$_{45}$Ti$_{55}$ | NiOH | 2N KOH | (a) | (a) | (a) |
| 4 | Ni$_{36}$Ti$_{64}$ | NiOH | 2N KOH | (a) | (a) | (a) |
| 5 | Ni$_{27}$Ti$_{73}$ | NiOH | 2N KOH | (a) | (a) | (a) |
| 6 | Pd$_5$Al$_5$Ni$_{14}$Ti$_{76}$ | NiOH | 2N KOH | 0.48 | 241(b) | 1 301 |
| 7 | Pd$_{10}$Ni$_{14}$Ti$_{76}$ | NiOH | 2N KOH | 0.56 | 272(c) | 1 597 |
| 8 | Pd$_5$Ni$_7$Ti$_{88}$ | NiOH | 2N KOH | 0.38 | 200 | 1 036 |
| 9 | Pd$_9$Ni$_{27}$Ti$_{64}$ | NiOH | 2N KOH | 0.48 | 231 | 1 469 |
| 10 | Pd$_5$Ni$_{14}$Ti$_{81}$ | NiOH | 2N KOH | 0.43 | 220 | 1 208 |
| 11 | Ag$_5$Cu$_5$Ni$_{20}$Ti$_{70}$ | NiOH | 2N KOH | 0.59 | 290 | 1 711 |
| 12 | Au$_{15}$Mo$_{15}$Ti$_{70}$ | NiOH | 2N KOH | 0.94 | 324 | 2 430 |
| 13 | Pd$_5$Ni$_{25}$Mg$_{20}$Ti$_{50}$ | NiOH | 2N KOH | 0.59 | 321 | 1 733 |
| 14 | Pd$_{20}$Mo$_{30}$Ti$_{50}$ | NiOH | 2N KOH | 0.69 | 254 | 1 956 |
| 15 | Pd$_{12}$Mo$_{30}$Ti$_{58}$ | graphite | 2N H$_2$SO$_4$ | 1.1 | 444(d) | 3 064 |
| 16 | Pd$_{10}$W$_{30}$Ti$_{60}$ | graphite | 2N H$_2$SO$_4$ | 0.79 | 225 | 2 160 |
| 17 | Pd$_{10}$Fe$_{20}$Ti$_{70}$ | graphite | 2N H$_3$PO$_4$ | 0.76 | 367 | 2 165 |
| 18 | Pd$_2$Ni$_{18}$Ti$_{80}$ | graphite | 2N H$_3$PO$_4$ | 0.64 | 340 | 1 836 |
| 19 | Ag$_{10}$Si$_{15}$Ti$_{75}$ | graphite | 2N H$_2$SO$_4$ | 0.36 | 190 | 912 |
| 20 | Ag$_{10}$W$_{20}$Ti$_{70}$ | graphite | 2N H$_2$SO$_4$ | 0.35 | 123 | 1 000 |
| 21 | Cu$_{11}$Mo$_{14}$Ti$_{75}$ | graphite | 2N H$_2$SO$_4$ | 0.18 | 90 | 517 |

a = oxidizes in less than about 3 cycles
b = after 250 cycles
c = after 450 cycles
d = after 200 cycles

The foregoing examples demonstrate the use of the inventive amorphous metal alloy compositions to reversibly store hydrogen. This ability is dramatically shown by contrasting Examples 4 and 9, and Examples 1 and 15.

In Example 4, the hydrogen storage electrode material comprised an amorphous alloy having an approximate composition of Ni$_{36}$Ti$_{64}$. This amorphous metal alloy composition is not in accordance with the present invention. The hydrogen electrode was disposed opposite a nickel hydroxide counter electrode and the electrolyte in the cell comprised 2N KOH. The efficiency of this control amorphous material could not be measured as the material was severely oxidized after about three deep discharge cycles. Replacing a portion of the nickel component of this composition with palladium produces an amorphous metal alloy composition in accordance with the present invention, such as Pd$_9$Ni$_{27}$Ti$_{64}$ used in Example 9. In this Example, the hydrogen storage electrode was also disposed opposite a nickel hydroxide counter electrode and disposed in an electrolyte of 2N KOH. The efficiency of Pd$_9$Ni$_{27}$Ti$_{64}$ as a reversible hydrogen storage material over the course of about 10 cycles was measured by a hydrogen-to-metal ratio of about 0.43 H/M and a charge density of about 220 mA-hr/gm and about 1 208 mA-hr/cm$^3$ with no signs of degradation.

In Example 1 a hydrogen storage electrode control material, crystalline palladium, was used in an electrolytic cell opposite a counter electrode of graphite and an electrolyte of 1N H$_2$SO$_4$. The efficiency of crystalline palladium was measured by a hydrogen-to-metal ratio of about 0.55 H/M and a charge density of about 139 mA-hr/gm and 1668 mA-hr/cm$^3$, and the crystalline palladium was seen to exhibit some corrosion. In Example 15, the hydrogen storage electrode material was an amorphous composition of about Pd$_{12}$Mo$_{30}$Ti$_{58}$. The counter electrode utilized was graphite and the electrolyte was 2N H$_2$SO$_4$. The hydrogen storage electrode material did not shown any corrosion throughout the about 200 cycles and demonstrated an efficiency measured by a hydrogen-to-metal ratio of about 1.1 H/M and a charge density of about 444 mA-hr/gm and 3064 mA-hr/cm$^3$, about 3 times greater charge density per weight than the crystalline palladium control material.

Although several amorphous metal alloy compositions have been exemplified herein, it will readily be appreciated by those skilled in the art that other amorphous metal alloys falling within the scope of the compositions described herein as well-suited for reversibly stored hydrogen could be substituted therefore.

It is to be understood that the foregoing examples have been provided to enable those skilled in the art to have representative examples by which to evaluate the invention and that these examples should not be construed as any limitation on the scope of this invention. In as much as the composition of the amorphous metal alloys employed in the present invention can be varied within the scope of the total specification disclosure, neither the particular A, M or M' components nor the relative amounts of the components in the alloys exemplified herein shall be construed as limitations of the invention.

Furthermore, while these alloys were prepared by a sputtering technique which is a useful means for depositing the alloy onto a metal substrate such as titanium, it is to be understood that neither the process of sputtering nor the coating of substrates are to be construed as limitations of the present invention, in as much as hydrogen storage materials can be prepared and utilized by other processes and in other forms.

The reversible hydrogen storage ability of the amorphous metal alloy compositions taught herein provide heretofor unattainable hydrogen storage ability, resistance to oxidation, and stability, and so represent a substantial advancement to hydrogen storage and its anciliary technologies and applications.

Thus, it is believed that any of the variables disclosed herein can readily be determined and controlled without departing from the invention as herein disclosed and described. Moreover, the scope of the invention shall include all modifications and variations that fall within the scope of the attached claims.

## Claims

1. A reversible hydrogen storage material comprising a metal alloy of the formula :

$$A_a M_b M'_c$$

wherein

A is at least one element selected from the group consisting of Ag, Au, Hg, Pd and Pt ;

M is at least one metal selected from the group consisting of Pb, Ru, Cu, Cr, Mo, Si, W, Ni, Al, Sn, Co, Fe, Zn, Cd, Ga and Mn ;

M' is at least one element selected from the group consisting of Ca, Mg, Ti, Y, Zr, Hf, Nb, V, Ta and the rare earth metals ;

and wherein

a ranges from about 0.005 to about 0.80 ;

b ranges from about 0.05 to about 0.70 ; and

c ranges from about 0.08 to about 0.95 and said metal alloy being at least fifty percent amorphous.

2. The reversible hydrogen storage material in accordance with Claim 1 wherein A is at least one metal selected from the group consisting of Ag and Pd.

3. The reversible hydrogen storage material in accordance with Claim 1 wherein M is at least one metal selected from the group consisting of Mn, Ru, Fe, Cu, Ni, Cr, Mo, Al and W.

4. The reversible hydrogen storage material in accordance with Claim 1 wherein M' is titanium, magnesium, tantalum or a combination thereof.

5. The reversible hydrogen storage material in accordance with Claim 1 wherein a ranges from about 0.01 to about 0.75 ; b ranges from about 0.1 to about 0.5 ; and c ranges from about 0.2 to about 0.85.

6. The reversible hydrogen storage material in accordance with Claim 1 wherein a ranges from 0.02 to about 0.7 ; b ranges from about 0.2 to about 0.4 ; and c ranges from about 0.3 to about 0.8.

7. The reversible hydrogen storage material in accordance with Claim 1 wherein said amorphous metal alloy is at least eighty percent amorphous.

8. The reversible hydrogen storage material in accordance with Claim 1 wherein said amorphous metal alloy is about one hundred percent amorphous.

9. The reversible hydrogen storage material in accordance with Claim 1 for use in non-aqueous electrolytes wherein M includes at least one of the elements Mo, Ru, W, Cr and Ni.

10. The reversible hydrogen storage material in accordance with Claim 1 for use with solid state proton conductors wherein M includes at least one of the elements Mo, Ru, W, Cr and Ni.

11. The reversible hydrogen storage material in accordance with Claim 1 for use in alkaline conditions wherein M includes at least one of the elements Mo, Ru, Ni and Mn.

12. The reversible hydrogen storage material in accordance with Claim 1 for use in neutral and acid conditions wherein M includes at least one of the elements Ru, Pb, Cu, Cr, W and Mo.

## Patentansprüche

1. Umkehrbar wasserstoffspeicherndes Material, das eine Metallegierung mit der folgenden Zusammensetzung aufweist :

7

$$A_a M_b M'_c$$

wobei

A wenigstens ein Element ist, das aus der Gruppe gewählt ist, die Ag, Au, Hg, Pd und Pt umfaßt ;

M wenigstens ein Metall ist, das aus einer Gruppe gewählt ist, die Pb, Ru, Cu, Cr, Mo, Si, W, Ni, Al, Sn, Co, Fe, Zn, Cd, Ga und Mn umfaßt ;

M' wenigstens ein Element ist, das aus der Gruppe gewählt ist, die Ca, Mg, Ti, Y, Zr, Hf, Nb, V, Ta und Seltenerdmetalle umfaßt ;

und wobei

a Bereiche von etwa 0,005 bis etwa 0,80 angibt ;

b Bereiche von etwa 0,05 bis etwa 0,70 angibt ; und

c Bereiche von etwa 0,08 bis etwa 0,95 angibt und wobei die Metallegierung wenigstens 50 % amorph ist.

2. Umkehrbar wasserstoffspeicherndes Material nach Anspruch 1, bei dem A wenigstens ein Metall ist, das aus der Gruppe gewählt ist, die Ag und Pd umfaßt.

3. Umkehrbar wasserstoffspeicherndes Material nach Anspruch 1, bei dem M wenigstens ein Metall ist, das aus der Gruppe gewählt ist, die Mn, Ru, Fe, Cu, Ni, Cr, Mo, Al und W umfaßt.

4. Umkehrbar wasserstoffspeicherndes Material nach Anspruch 1, bei dem M' Titan, Magnesium, Tantal oder eine Kombination hiervon ist.

5. Umkehrbar wasserstoffspeicherndes Material nach Anspruch 1, bei dem a Bereiche von etwa 0,01 bis etwa 0,75 angibt ; b Bereiche von etwa 0,1 bis etwa 0,5 angibt und c Bereiche von etwa 0,2 bis etwa 0,85 angibt.

6. Umkehrbar wasserstoffspeicherndes Material nach Anspruch 1, bei dem a Bereiche von 0,02 bis etwa 0,7 angibt ; b Bereiche von etwa 0,2 bis etwa 0,4 und c Bereiche von etwa 0,3 bis etwa 0,8 angibt.

7. Umkehrbar wasserstoffspeicherndes Material nach Anspruch 1, bei dem die amorphe Metallegierung wenigstens 80 % amorph ist.

8. Umkehrbar wasserstoffspeicherndes Material nach Anspruch 1, bei dem die amorphe Metallegierung etwa 100 % amorph ist.

9. Umkehrbar wasserstoffspeicherndes Material nach Anspruch 1 zur Verwendung in nicht-wäßrigen Elektrolyten, wobei M wenigstens eines der Elemente Mo, Ru, W, Cr und Ni umfaßt.

10. Umkehrbar wasserstoffspeicherndes Material nach Anspruch 1 zur Verwendung bei Festkörper-Protonleitern, wobei M wenigstens eines der Elemente Mo, Ru, W, Cr und Ni umfaßt.

11. Umkehrbar wasserstoffspeicherndes Material nach Anspruch 1 zur Verwendung unter alkalischen Bedingungen, wobei M wenigstens eines der Elemente Mo, Ru, Ni und Mn umfaßt.

12. Umkehrbar wasserstoffspeicherndes Material nach Anspruch 1 zur Verwendung unter neutralen und sauren Bedingungen, wobei M wenigstens eines der Elemente Ru, Pb, Cu, Cr, W und Mo umfaßt.

**Revendications**

1. Matériau de stockage réversible de l'hydrogène comprenant un alliage métallique de formule :

$$A_a M_b M'_c$$

dans laquelle

A est au moins un élément choisi dans le groupe constitué de Ag, Au, Hg, Pd et Pt,

M est au moins un métal choisi dans le groupe constitué de Pb, Ru, Cu, Cr, Mo, Si, W, Ni, Al, Sn, Co, Fe, Zn, Cd, Ga et Mn et

M' est au moins un élément choisi dans le groupe constitué de Ca, Mg, Ti, Y, Zr, Hf, Nb, V, Ta et les métaux des terres rares et dans laquelle

a est dans la gamme d'environ 0,005 à environ 0,80,

b est dans la gamme d'environ 0,05 à environ 0,70 et

c est dans la gamme d'environ 0,08 à environ 0,95, ledit alliage étant au moins pour 50 % amorphe.

2. Matériau de stockage réversible de l'hydrogène, suivant la revendication 1, dans lequel A est au moins un métal choisi dans le groupe constitué de Ag et Pd.

3. Matériau de stockage réversible de l'hydrogène, suivant la revendication 1, dans lequel M est au moins un métal choisi dans le groupe constitué de Mn, Ru, Fe, Cu, Ni, Cr, Mo, Al et W.

4. Matériau de stockage réversible de l'hydrogène suivant la revendication 1, dans lequel M' est le titane, le magnésium, le tantale ou une combinaison de ceux-ci.

5. Matériau de stockage réversible de l'hydrogène suivant la revendication 1, dans lequel a est dans la gamme d'environ 0,01 à environ 0,075, b est dans la gamme d'environ 0,1 à environ 0,5 et c est dans la gamme d'environ 0,2 à environ 0,85.

6. Matériau de stockage réversible de l'hydrogène suivant la revendication 1, dans lequel a est dans la gamme de 0,02 à environ 0,7, b est dans la gamme d'environ 0,2 à environ 0,4 et c est dans la gamme d'environ 0,3 à environ 0,8.

7. Matériau de stockage réversible de l'hydrogène suivant la revendication 1, dans lequel ledit alliage amorphe est au moins pour 80 % amorphe.

8. Matériau de stockage réversible de l'hydrogène suivant la revendication 1, dans lequel ledit alliage amorphe est amorphe à environ 100 %.

9. Matériau de stockage réversible de l'hydrogène suivant la revendication 1 et destiné à être utilisé dans des électrolytes non aqueux, dans lequel M comprend au moins l'un des éléments Mo, Ru, W, Cr et Ni.

10. Matériau de stockage réversible de l'hydrogène suivant la revendication 1 et destiné à être utilisé avec des conducteurs protoniques à l'état solide, dans lequel M comprend au moins l'un des éléments Mo, Ru, W, Cr et Ni.

11. Matériau de stockage réversible de l'hydrogène suivant la revendication 1 et destiné à être utilisé dans des conditions basiques, dans lequel M comprend au moins l'un des éléments Mo, Ru, Ni et Mn.

12. Matériau de stockage réversible de l'hydrogène suivant la revendication 1 et destiné à être utilisé dans des conditions neutres et acides, dans lequel M comprend au moins l'un des éléments Ru, Pb, Cu, Cr, W et Mo.